# EUROPÄISCHE PATENTSCHRIFT

(11) **EP 2 666 227 B1**
(45) Veröffentlichungstag und Bekanntmachung des Hinweises auf die Patenterteilung: **03.01.2018**
(21) Anmeldenummer: 12702452.9
(22) Anmeldetag: 18.01.2012
(51) Int. Cl.: H02J 7/04, H02J 7/00

(54) **ELEKTROCHEMISCHER ENERGIESPEICHER UND VERFAHREN ZUR BESTIMMUNG DESSEN TEMPERATUR**
ELECTROCHEMICAL ENERGY STORE AND METHOD FOR DETERMINING THE TEMPERATURE THEREOF
ACCUMULATEUR D'ÉNERGIE ÉLECTROCHIMIQUE ET PROCÉDÉ PERMETTANT D'EN DÉTERMINER LA TEMPÉRATURE

(30) Priorität: 18.01.2011 DE 102011002841
(43) Veröffentlichungstag der Anmeldung: 27.11.2013
(73) Patentinhaber: Fraunhofer-Gesellschaft zur Förderung der angewandten Forschung e.V., 80686 München (DE)
(72) Erfinder: SCHADE, Wolfgang, 38644 Goslar (DE); HAUBROCK, André, 32257 Bünde (DE); BECK, Hans-Peter, 38640 Goslar (DE); BENGER, Ralf, 37539 Windhausen (DE)
(74) Vertreter: Friese Goeden Patentanwälte PartGmbB
(86) Internationale Anmeldenummer: PCT/EP2012/050711
(87) Internationale Veröffentlichungsnummer: WO 2012/098159

(56) Entgegenhaltungen:
- WO-A2-2010/142511

## Beschreibung

Die Erfindung betrifft einen elektrochemischen Energiespeicher, enthaltend eine Zellenanordnung mit mindestens einer elektrochemischen Zelle und Temperaturerfassungsmittel, welche mindestens eine Information über die Temperatur zumindest einer elektrochemischen Zelle bereitstellen.
Aus der DE 1 952 042 ist bekannt, die Temperatur einer Akkumulatorenbatterie zu messen und den zugeführten Ladestrom thermostatgesteuert zu wählen. Zur Temperaturmessung wird dabei ein metallischer Widerstandsdraht mit positivem Temperaturkoeffizient verwendet. Mit diesem bekannten Verfahren kann die Batterie mit hohen Strömen in kurzer Zeit geladen werden. Das Risiko einer Beschädigung der Batterie kann dabei durch rechtzeitige Reduktion des Ladestromes bei Temperaturanstieg zumindest reduziert werden. Der Nachteil dieser bekannten Vorrichtung besteht jedoch darin, dass bei hohen Belastungs- und Ladeströmen starke elektromagnetische Felder im Wirkbereich des als Temperatursensor verwendeten Widerstandsdrahtes auftreten. Diese Felder können eine elektrische Spannung in den Widerstandsdraht induzieren, sodass die Temperaturmessung durch den Ladestrom gestört wird. Sofern die Batterie aus mehreren einzelnen Batteriezellen zusammengesetzt ist, deren Temperatur einzeln überwacht werden soll, wird der Aufwand für die Verdrahtung und Messwerterfassung einer Vielzahl solcher Temperatursensoren, welche jeweils in Zweidrahttechnik angeschlossen sind, sehr aufwendig. Aus der WO 2010/142511 A2 ist ein elektrochemischer Energiespeicher mit faseroptischer Temperaturmessung an einzelnen Zellen des Energiespeichers entsprechend des einleitenden Teils von Anspruch 1 bekannt. Der Erfindung liegt somit die Aufgabe zugrunde, die Temperatur einer Batterie bzw. eines elektrochemischen Energiespeichers auch bei Anwesenheit von elektromagnetischen Feldern zuverlässig zu überwachen. Weiterhin besteht die Aufgabe der Erfindung darin, eine Temperaturverteilung mit großer Ortsauflösung bzw. einer Vielzahl von Messpunkten in kostengünstiger Weise und zuverlässig zu erfassen.
Die Aufgabe wird erfindungsgemäß durch einen elektrochemischen Energiespeicher gemäß Anspruch 1, ein Verfahren gemäß Anspruch 12 sowie ein Fahrzeug gemäß Anspruch 15 gelöst.
Erfindungsgemäß wird vorgeschlagen, die Temperatur innerhalb eines elektrochemischen Energiespeichers bzw. innerhalb dessen Zellenstruktur mit zumindest einem faseroptischen Sensor zu überwachen.
Der erfindungsgemäß vorgeschlagene elektrochemische Energiespeicher ist dazu vorgesehen, chemische Energie in elektrische Energie zu wandeln. Beispielsweise kann der elektrochemische Energiespeicher zumindest eine Brennstoffzelle, zumindest eine Primärzelle oder zumindest eine Sekundärzelle umfassen. Wahlweise ist auch eine Kombination dieser Elemente denkbar. Der vorgeschlagene Energiespeicher kann eine Zellenanordnung mit mindestens einer elektrochemischen Zelle aufweisen. Eine Mehrzahl elektrochemischer Zellen kann in der Zellenanordnung parallel oder seriell miteinander verschaltet sein. In einigen Ausführungsformen der Erfindung kann eine Mehrzahl parallel verschalteter Zellen seriell mit einer weiteren Mehrzahl parallel verschalteter Zellen verschaltet sein. In anderen Ausführungsformen der Erfindung können mehrere seriell verschaltete Zellen mit zumindest einer weiteren Serienschaltung einer Mehrzahl von Zellen parallel verschaltet sein. Durch die Parallelschaltung einer Mehrzahl von Zellen bzw. Zellenanordnungen kann der vom elektrochemischen Energiespeicher bereitgestellte elektrische Strom vergrößert werden. Durch eine Serienschaltung einer Mehrzahl von Zellen bzw. Zellenanordnungen kann die vom Energiespeicher bereitgestellte elektrische Spannung vergrößert werden. In jedem Fall ergibt sich eine Mehrzahl von Zellen enthaltende Substruktur des elektrochemischen Energiespeichers.

Einzelne oder alle elektrochemische Zellen aus einer Mehrzahl von elektrochemischen Zellen können Fertigungstoleranzen aufweisen, welche beispielsweise geringfügige Dickenunterschiede, lokale Unterschiede im Anpressdruck zwischen zwei Komponenten der Zellen, unterschiedliche Konzentration der Reaktionspartner am Reaktionsort oder lokale Materialinhomogenitäten umfassen. Diese Fertigungstoleranzen können entweder zu geringfügigen Unterschieden der elektrischen Widerstände und/oder zu unterschiedlichen elektrischen Spannungen und/oder zu Unterschieden in der jeweiligen Strombelastbarkeit führen. Daher können Zellen mit nominell gleichen Kennwerten wie Spannung, Strombelastbarkeit, Innenwiderstand und/oder Kapazität unterschiedliche elektrische Eigenschaften aufweisen. Innerhalb einer Zelle können Raumbereiche mit unterschiedlichen elektrischen Eigenschaften entstehen.

Wird nun einem solchen Energiespeicher ein Ladestrom zugeführt oder ein Nutzstrom entnommen, so kann sich der jeweilige Strom der einzelnen Zellen gemäß deren Innenwiderstand einstellen. Hieraus resultiert ein inhomogener Ladezustand und letztlich eine inhomogene Alterung der Zellen bzw. einzelner Raumbereiche innerhalb einer Zelle. Die volle Leistungsfähigkeit des Energiespeichers kann somit nur für einen begrenzten Zeitraum gewährleistet werden.

Erfindungsgemäß wird nun vorgeschlagen, mittels zumindest eines faseroptischen Sensors eine Temperaturüberwachung einzelner Teilkomponenten des Energiespeichers durchzuführen, beispielsweise einzelner Zellenanordnungen oder einzelner elektrochemischer Zellen. Dadurch kann ein elektrischer Parameter wie beispielsweise die Spannung, der Ladestrom, der Entladestrom oder ein Kühlsystem so beeinflusst werden, dass eine vorzeitige Schädigung einzelner Zellen und damit eine Schädigung des Energiespeichers vermieden werden kann. Die volle Leistungsfähigkeit des Energiespeichers kann damit für einen längeren Zeitraum gewährleistet werden.

Die Temperaturerfassung durch einen faseroptischen Sensor erfolgt dabei rein optisch, sodass das Signal durch elektromagnetische Felder innerhalb des Energiespeichers bzw. in dessen unmittelbarer Umgebung nicht beeinflusst werden kann. Sofern eine Wandlung des optischen in ein elektrisches Signal erforderlich ist, kann diese innerhalb einer Abschirmung und/oder an einer vom Magnetfeld des Lade- und/oder Entladestroms weniger beeinflussten Stelle des Energiespeichers bzw. des den Energiespeicher enthaltenden Gerätes erfolgen.

Weiterhin kann ein faseroptischer Sensor mit einer vorgebbaren Längserstreckung im Zeitmultiplex- oder im Wellenlängenmultiplex-Verfahren ortsabhängig ausgelesen werden, sodass mit einem einzigen faseroptischen Sensor eine Mehrzahl von Temperaturmessstellen realisiert werden kann. Hierdurch wird der erforderliche Verdrahtungsaufwand reduziert, sodass die Zuverlässigkeit steigt und die Kosten sinken. Hierdurch ist es möglich, mehrere Zellen mit nur einem faseroptischen Sensor zu überwachen.

In einigen Ausführungsformen der Erfindung kann eine Temperaturmessstelle in oder an jeder elektrochemischen Zelle des elektrochemischen Energiespeichers realisiert werden, sodass die Zellentemperatur in einfacher Weise überwacht werden kann. In anderen Ausführungsformen der Erfindung können mehrere elektrochemische Zellen zu einer Zellenanordnung zusammengefasst sein, wobei jeder Zellenanordnung zumindest eine Messstelle des faseroptischen Sensors zugewiesen ist, sodass die Temperatur der Zellenanordnung überwacht werden kann. In einer weiteren Ausführungsform der Erfindung können mehrere Temperaturmessstellen innerhalb einer einzigen elektrochemischen Zelle realisiert werden, sodass Temperaturinhomogenitäten innerhalb der Zelle erfasst werden können. In diesem Fall kann vorgesehen sein, durch einen Regelungseingriff die Stromlast und damit die Alterung innerhalb einer einzigen elektrochemischen Zelle zu homogenisieren.

In einigen Ausführungsformen der Erfindung kann der elektrochemische Energiespeicher bzw. die elektrochemische Zelle ausgewählt sein aus einer elektrometallurgischen bzw. galvanischen Anlage, einer Elektrolyseanlage, einer Primärzelle, einer Sekundärzelle, einem Doppelschichtkondensator, einer Redox-Flow-Zelle oder einer Brennstoffzelle. In jedem Fall bezeichnet der elektrochemische Energiespeicher ein System, bei welchem ein elektrischer Strom aus einer chemischen Reaktion gewonnen wird und in elektronen- und/oder ionenleitenden Komponenten wie Endplatten, Bipolarplatten, Elektrolyt, Diaphragmen oder weiteren, nicht genannten Komponenten fließt.

In einigen Ausführungsformen der Erfindung kann eine Sekundärzelle ausgewählt sein aus einer Lithium-Polymerzelle, einer Nickel-Kadmiumzelle, einer Nickel-Metallhydridzelle und/oder einer Natrium-Nickelchloridzelle. In diesem Fall kann die vorgeschlagene Temperaturerfassung mittels zumindest eines faseroptischen Sensors zur Regelung des Ladestromes und/oder zur Regelung des Entladestromes und/oder zur Beeinflussung eines Kühlsystems eingesetzt werden. Auf diese Weise kann ein Energiespeicher mit einer Mehrzahl von Zellen mit einer größeren durchschnittlichen Leistung, einer vergrößerten Speicherkapazität und/oder einer längeren Lebensdauer bereitgestellt werden.

In einigen Ausführungsformen der Erfindung kann der vorgeschlagene Energiespeicher weiterhin eine erste Regeleinrichtung enthalten, welcher zumindest eine Information über die Temperatur zumindest einer elektrochemischen Zelle zuführbar ist und welche dazu eingerichtet ist, einen Ladestrom und/oder einen Entladestrom zumindest einer elektrochemischen Zelle zu regeln. Die vorgeschlagene Regeleinrichtung kann einen P-Regler, einen PI-Regler, einen PD-Regler oder einen PID-Regler enthalten. In einigen Ausführungsformen der Erfindung kann die Regeleinrichtung als neuronales Netz oder in Fuzzy-Logik ausgeführt sein. Die Regeleinrichtung kann in einigen Ausführungsformen der Erfindung in Form mehrerer miteinander gekoppelter Halbleiterbauelemente ausgeführt sein. In anderen Ausführungsformen der Erfindung kann die Regeleinrichtung in Form einer Software bereitgestellt werden, welche die gewünschte Regelfunktion ausführt, wenn diese auf einem Mikroprozessor ausgeführt wird. Die Regeleinrichtung kann dazu eingesetzt werden, die Stromentnahme bzw. die Stromzufuhr zu drosseln, wenn die Temperatur einer Zelle oder einer Zellanordnung oberhalb eines vorgebbaren Grenzwertes ansteigt. Auf diese Weise kann die Temperatur aller elektrochemischen Zellen und damit deren Lebensdauer homogenisiert werden. Im Falle eines Regeleingriffes können unterschiedliche Zellen einen unterschiedlichen Anteil zum gesamten Ladelade- bzw. Entladestrom des Energiespeichers beisteuern.

In einigen Ausführungsformen der Erfindung kann der Energiespeicher weiterhin einen Wärmetauscher enthalten. Ein Wärmetauscher, in welchem ein Wärmeträgermedium zirkuliert oder zirkulierbar ist, kann in einigen Ausführungsformen der Erfindung als Einrichtung zur Entwärmung genutzt werden, um Abwärme vom Energiespeicher abzuführen. Das Wärmeträgermedium kann in einigen Ausführungsformen der Erfindung Luft, Wasser oder Öl sein. In anderen Ausführungsformen der Erfindung kann der Wärmetauscher einen Latentwärmespeicher bzw. ein Phasenwechselmaterial enthalten. In wiederum einer anderen Ausführungsform der Erfindung kann der Wärmetauscher bzw. die Einrichtung zur Entwärmung thermische Energie über Kühlbleche bzw. Kühlkörper durch Konvektion an die Umgebung abgeben. Mittels der genannten Maßnahmen kann sichergestellt werden, dass die Zellen des Energiespeichers keiner Temperatur oberhalb eines vorgebbaren Grenzwertes ausgesetzt werden, welcher die Grenze zur Zerstörung oder vorzeitigen Alterung markiert.

Ein Wärmetauscher, in welchem ein Wärmeträgermedium zirkuliert oder zirkulierbar ist, kann in einigen Ausführungsformen der Erfindung als Einrichtung zur Erwärmung genutzt werden, um den Energiespeicher auf eine Betriebstemperatur zu erwärmen. Das Wärmeträgermedium kann in einigen Ausführungsformen der Erfindung Luft, Wasser oder Öl sein. In anderen Ausführungsformen der Erfindung kann der Wärmetauscher einen Latentwärmespeicher bzw. ein Phasenwechselmaterial enthalten. Mittels der genannten Maßnahmen kann sichergestellt werden, dass die Zellen des Energiespeichers im Betrieb und/oder bei der Ladung einer Temperatur oberhalb eines vorgebbaren Grenzwertes ausgesetzt werden, bei welchem die Leistungsfähigkeit erhöht ist.

In einigen Ausführungsformen der Erfindung kann der Energiespeicher eine zweite Regeleinrichtung enthalten, welcher zumindest eine Information über die Temperatur zumindest einer elektrochemischen Zelle zuführbar ist und welche dazu eingerichtet ist, den Fluss eines Wärmeträgermediums im Wärmetauscher zu regeln. In diesem Fall können einzelne Zellen bzw. eine Gruppe von Zellen bei Auftreten einer Überwärmung verstärkt gekühlt bzw. entwärmt werden, sodass die Temperatur unterhalb eines vorgebbaren Grenzwertes sinkt. Dadurch kann die Lebensdauer und/oder der Entladestrom und/oder der Ladestrom ansteigen.

In einigen Ausführungsformen der Erfindung kann der faseroptische Sensor zumindest ein Faser-Bragg-Gitter enthalten. Das Faser-Bragg-Gitter reflektiert einfallende Strahlung einer vorgebbaren, von der Gitterkonstanten abhängigen Wellenlänge in die Einfallsrichtung zurück. Aufgrund der thermischen Ausdehnung kann sich die Gitterkonstante des Faser-Bragg-Gitters und damit der reflektierte Wellenlängenbereich ändern. Dies erlaubt die Bestimmung der örtlichen Temperatur einer optischen Faser am Ort des Faser-Bragg-Gitters. Sofern eine einzelne optische Faser eine Mehrzahl von Faser-Bragg-Gittern unterschiedlicher Gitterkonstante enthält, kann die Temperatur an mehreren Orten entlang der Faser anhand der bei einer bestimmten Wellenlänge bzw. in einem Wellenlängenbereich reflektierten Intensität bestimmt werden.

In einigen Ausführungsformen der Erfindung kann der faseroptische Sensor mit dem Eingang eines planaroptischen Filterelementes verbunden sein, insbesondere einem Arrayed-Waveguide-Grating und/oder einem Spektrometer und/oder einem anderen, nicht genannten dispersiven Element. Damit ist die Bestimmung der Intensität bei vorgebbaren Wellenlängen bzw. in vorgebbaren Wellenlängenbereichen möglich, sodass eine Temperaturänderung einer Zelle zu einer Signaländerung an zumindest einem Ausgang des planaroptischen Filterelementes führt. Dies erlaubt die fortwährende Kontrolle der Temperaturen innerhalb des Energiespeichers mit großer Genauigkeit.

In einigen Ausführungsformen der Erfindung kann die Information über die Temperatur durch eine Brillouin-und/oder Raman-Streuung im faseroptischen Sensor erhältlich sein. Die inelastische Streuung von Photonen an akustischen Phononen wird dabei als Brillouin-Streuung, die inelastische Streuung an optischen Phononen als Raman-Streuung bezeichnet. In diesen Ausführungsformen der Erfindung kann der faseroptische Sensor eine Single- oder Multimode-Faser sein. Die Faser kann zusätzlich Faser-Bragg-Gitter enthalten oder eine konventionelle Telekommunikationsfaser ohne solche Gitter sein. In diesem Fall kann die Ortsauflösung entweder über die Signallaufzeit erhalten werden oder der faseroptische Sensor bestimmt eine mittlere Temperatur entlang seiner Längserstreckung.

In einigen Ausführungsformen der Erfindung kann der Energiespeicher weiterhin ein Passstück enthalten, mit welchem eine temperaturabhängige mechanische Spannung auf den faseroptischen Sensor aufbringbar ist. Hierzu kann das Passstück eine Bohrung oder einen Schlitz aufweisen, in welchen die optische Faser geführt ist. Da sich bei unterschiedlicher thermischer Ausdehnung des Passstückes unter der optischen Faser die relativen Maße verändern, ändert sich auch die vom Passstück auf die Faser aufgebrachte mechanische Spannung. In einer solchen Ausführungsform der Erfindung bestimmt der faseroptische Sensor die auf ihn einwirkende mechanische Spannung, beispielsweise durch die Änderung der Gitterkonstanten eines Faser-Bragg-Gitters oder durch die Signalverzerrung eines auf der Faser laufenden optischen Signals. Aus der mechanischen Spannung kann nach Kalibrierung die Temperatur am Ort des Passstückes bestimmt werden.

Weitere Details zur Temperaturmessung mit faseroptischen Sensoren, zur Signalauslese und zur Signalerzeugung finden sich in der WO 2011/089244 A2, deren gesamter Inhalt durch Bezugnahme in die vorliegende Beschreibung aufgenommen wird.

Nachfolgend soll die Erfindung anhand von Figuren ohne Beschränkung des allgemeinen Erfindungsgedankens näher erläutert werden. Hierbei zeigt:
- Figur 1: den mechanischen Aufbau eines elektrochemischen Energiespeichers gemäß einer Ausführungsform der Erfindung.
- Figur 2: zeigt den Energiespeicher gemäß Figur 1, nachdem dieser mit elektrochemischen Zellen bestückt wurde.
- Figur 3: zeigt ein Ausführungsbeispiel einer elektrochemischen Zelle gemäß der vorliegenden Erfindung.
- Figur 4: zeigt eine Signalauslese für eine Mehrzahl von faser-optischen Sensoren.
- Figur 5: zeigt die Messwerte von bekannten Temperatursensoren und dem vorgeschlagenen faseroptischen Sensor im Vergleich.
- Figur 6: zeigt ein Schaltbild eines elektrochemischen Energiespeichers gemäß der vorliegenden Erfindung.

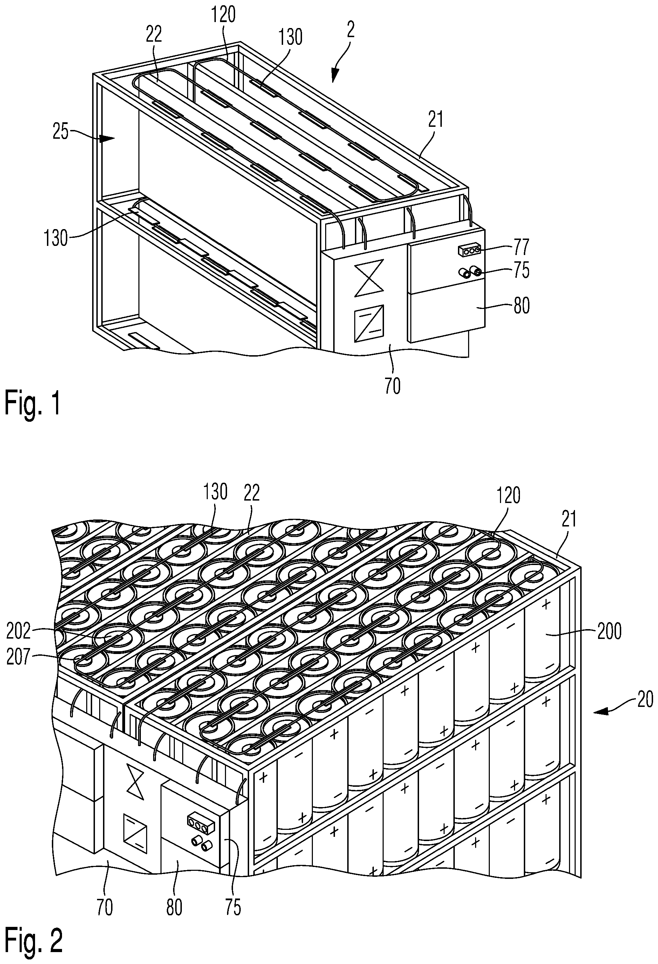

Figur 1 zeigt den mechanischen Aufbau eines elektrochemischen Energiespeichers 2 gemäß einer Ausführungsform der vorliegenden Erfindung. Der Energiespeicher 2 enthält einen Rahmen 21, welcher die äußere Form des Energiespeichers begrenzt und dessen mechanische Stabilität sicherstellt. Mittels des Rahmens 21 kann der Energiespeicher transportiert und wahlweise auch befestigt werden, beispielsweise in einem Fahrzeug. Der Rahmen 21 kann in einigen Ausführungsformen der Erfindung aus einem Metall oder einer Legierung oder einem faserverstärkten Kunststoff gefertigt sein. In einigen Ausführungsformen der Erfindung kann der Rahmen 21 Aluminium, Magnesium, Stahl oder Kohlenstofffasern enthalten.

Der Rahmen 21 ist mit Trennwänden 22 in einzelne Aufnahmeräume 25 unterteilt. Jeder der Aufnahmeräume 25 ist zur Aufnahme einer Mehrzahl elektrochemischer Zellen vorgesehen. Hierzu kann die Trennwand 22 aus einem elektrisch isolierenden Material gefertigt sein, beispielsweise einem Kunststoff. In anderen Ausführungsformen der Erfindung kann die Trennwand 22 Fluidkanäle enthalten, in welchen ein Kühlmedium zirkulierbar ist, sodass die Trennwand 22 gleichzeitig als Wärmetauscher einsetzbar ist, um thermische Energie von den elektrochemischen Zellen abzuleiten. In diesem Fall können die Trennwände 22 aus einem Material hoher thermischer Leitfähigkeit bestehen, beispielsweise Aluminium oder Kupfer.

In einigen Ausführungsformen der Erfindung können die Trennwände 22 Halteelemente aufweisen, um eine zusätzliche mechanische Befestigung der elektrochemischen Zellen zu ermöglichen.

Weiterhin enthält der Energiespeicher 2 gemäß Figur 1 eine Mehrzahl von Passstücken 130, welche im dargestellten Ausführungsbeispiel eine Doppelfunktion aufweisen. Einerseits dienen die Passstücke 130 zur Kontaktierung zweier benachbarter elektrochemischer Zellen, sodass ein elektrischer Stromfluss zwischen benachbarten Zellen ermöglicht wird. Andererseits stehen die Passstücke 130 in Kontakt mit zumindest einem faseroptischen Sensor 120, sodass die Passstücke 130 eine temperaturabhängige mechanische Spannung auf einen Teilabschnitt des faseroptischen Sensors 120 ausüben können. In einigen Ausführungsformen der Erfindung kann dieser Teilabschnitt mit zumindest einem Faser-Bragg-Gitter versehen sein.

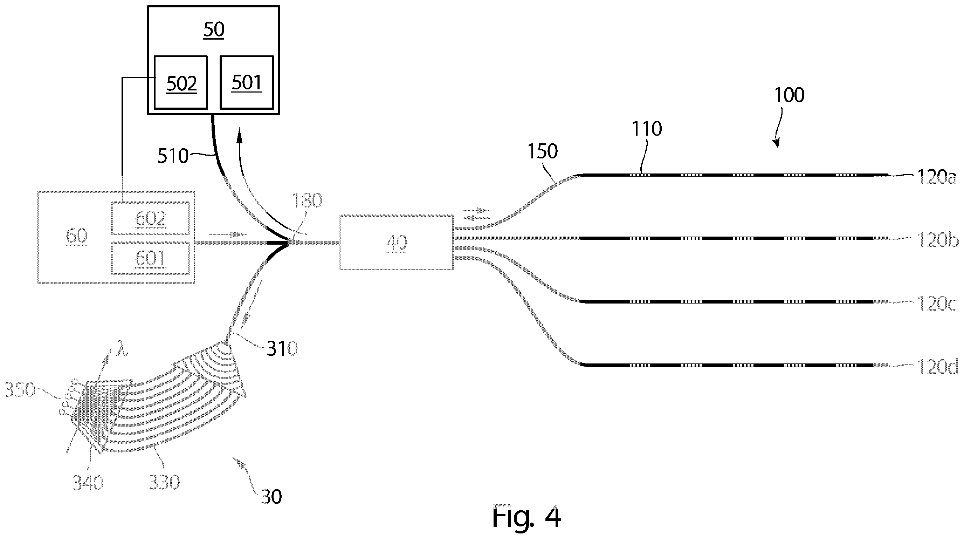

In Figur 1 ist weiterhin eine erste Regeleinrichtung 70 erkennbar, welche eine Einrichtung zur Signalerzeugung und -erfassung des faseroptischen Sensors 120 enthält. Diese Einrichtungen werden anhand von Figur 4 näher erläutert. Weiterhin kann die erste Regeleinrichtung 70 in einigen Ausführungsformen der Erfindung den aus den Zellen entnommenen Strom in Abhängigkeit von den gemessenen Temperaturen beeinflussen.

In einigen Ausführungsformen der Erfindung kann weiterhin eine optionale zweite Regeleinrichtung 75 vorgesehen sein, welche dazu eingerichtet ist, einen Kühlmittelfluss in den Wärmetauschern bzw. Trennwänden 22 zu beeinflussen. Der Kühlmittelfluss wird von einer Einrichtung 80 bereitgestellt bzw. aufrechterhalten, welche einen Wärmetauscher und/oder ein Wärmeträgermedium und/oder eine Umwälzpumpe enthält. Die Regeleinrichtung 75 kann weiterhin optionale Bedienelemente 77 aufweisen, mit welchen eine vorgebbare Temperatur und/oder ein Ladestrom und/oder ein Entladestrom vorgebbar ist. In einigen Ausführungsformen der Erfindung kann die Bedieneinrichtung 77 auch dazu eingerichtet sein, Messwerte der Regeleinrichtungen 70 und 75 sowie Betriebsdaten der Einrichtung 80 auszugeben oder über eine Schnittstelle verfügbar zu machen.

Figur 2 zeigt, wie eine Mehrzahl elektrochemischer Zellen 200 in den Energiespeicher 2 eingeführt werden kann. Im dargestellten Ausführungsbeispiel befinden sich jeweils neun seriell verschalteten Zellen 200 in einem Aufnahmeraum 25. Die Zellen 200 sind somit zumindest einseitig mit einem Wärmetauscher 22 in Kontakt. Die Zellen 200 weisen jeweils einen ersten Anschlusskontakt 202 und einen zweiten Anschlusskontakt 207 auf. Der erste Anschlusskontakt 202 weist dabei eine erste Polarität auf, beispielsweise einen MinusPol. Der zweite Anschlusskontakt 207 weist eine zweite Polarität auf, beispielsweise einen Plus-Pol. Jeweils zwei benachbarte Zellen 200 sind mit ihren ersten und zweiten Anschlusskontakten über die Passstücke 130 miteinander verschaltet, sodass sich eine Serienschaltung der Zellen 200 ergibt. Eine Mehrzahl von Serienschaltung, im dargestellten Ausführungsbeispiel sechs Serienschaltungen, kann wiederum parallel geschaltet werden, um den vom Energiespeicher 2 bereitgestellten Ausgangsstrom zu erhöhen. Selbstverständlich ist die Erfindung nicht auf die dargestellten Rundzellen beschränkt. In anderen Ausführungsformen der Erfindung können die Zellen 200 auch andere Gehäuseformen aufweisen.

Da die Passstücke 130 in elektrisch leitfähigem Kontakt mit den Zellen 200 stehen, stehen die Passstücke 130 auch in gutem thermischem Kontakt mit den Zellen 200. Eine Erwärmung der Passstücke 130 kann somit einer Erwärmung der zugehörigen Zelle 200 zugeordnet werden. Wird nun dem Energiespeicher ein Lade- oder Entladestrom zugeführt, so verteilt dieser sich aufgrund der Fertigungstoleranzen der Zelle 200 ungleichmäßig auf die jeweiligen Zellen 200 der Zellenanordnung 20 des Energiespeichers 2. Diese Inhomogenitäten können aufgrund der unterschiedlichen Erwärmung durch den faseroptischen Sensor 120 erkannt werden. Nachfolgend kann durch Beeinflussung der Einrichtung 80 zur Erwärmung und/oder Entwärmung und/oder durch Änderung der Stromverteilung die Beanspruchung einzelner Zellen 200 aus der Zellenanordnung 20 so verändert werden, dass die gesamte Zellenanordnung 20 eine längere Lebensdauer und/oder eine kürzere Ladezeit und/oder einen höheren Entladestrom erreicht. Da die Temperaturerfassung rein optisch erfolgt, bleibt die Temperaturerfassung auch von hohen Lade- oder Entladeströmen und den damit einhergehenden elektromagnetischen Feldern unbeeinflusst.

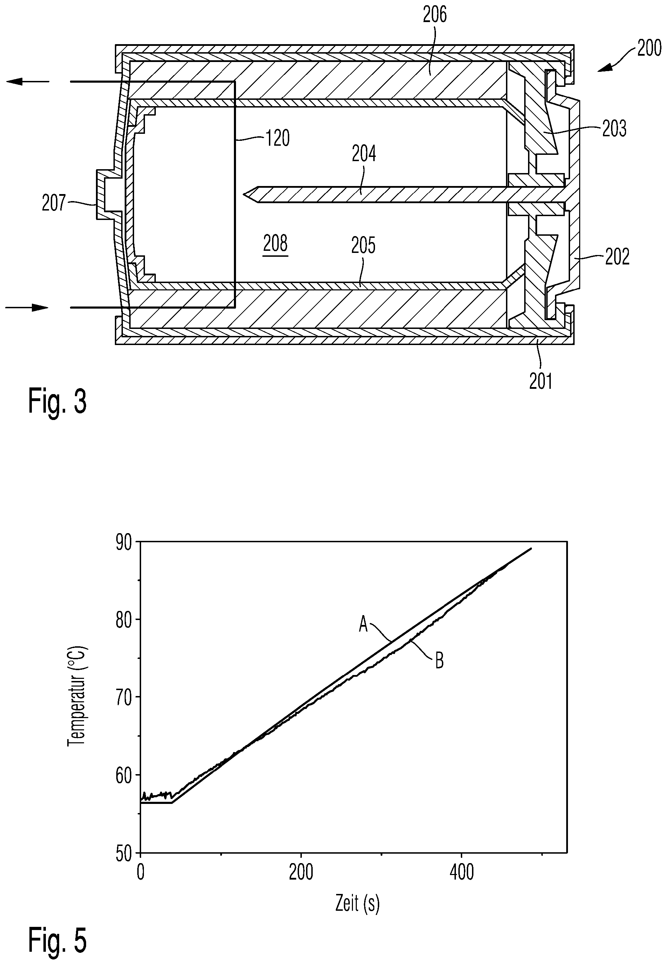

Figur 3 zeigt einen Querschnitt durch eine elektrochemische Zelle gemäß einer Ausführungsform der Erfindung. Die Zelle 200 weist eine zylindrische Grundform auf. An den Stirnseiten der zylindrischen Zelle befindet sich ein erster Anschlusskontakt 202 und ein zweiter Anschlusskontakt 207. Beide Anschlusskontakte sind durch ein Isolierelement 203 voneinander getrennt. Der zweite Anschlusskontakt 207 bildet gleichzeitig die Mantelfläche der zylindrischen Grundform der Zelle 200. Die Mantelfläche kann durch eine isolierende Folie 201 vor zufälliger Berührung geschützt sein.

Der erste Kontakt 202 steht im elektrisch leitenden Kontakt mit einem Kollektor. Zur Erzeugung einer elektrischen Spannung zwischen dem ersten Kontakt 202 und dem zweiten Kontakt 207 dient ein elektrochemisches System aus einem ersten Material 206 und einem zweiten Material 208. Beide können durch ein optionales Diaphragma 205 voneinander getrennt sein.

Das erste Material 206 und das zweite Material 208 kann in einigen Ausführungsformen der Erfindung ein Material enthalten, welches ausgewählt ist aus Mangandioxid, Kadmium, einem Metallhydrid, Nickelchlorid, Sauerstoff, Kohlenstoff, Cobalt, Nickel, Natrium, einem Lithium-Metalloxid, Wasserstoff, Methanol oder Zink. Das optionale Diaphragma 205 kann eine Ionen leitende Membran aus einem Polymer, einem Ionomer, einem Zellstoff oder einem sulfoniertem Tetrafluorethylen-Polymer sein. Die chemische Reaktion zwischen dem ersten Material 206 und dem zweiten Material 208 führt zu einer elektrischen Spannung an den Elektroden 202 und 207. Die Erfindung lehrt nicht die Verwendung eines speziellen, elektrochemischen Energiespeichers und damit die Verwendung spezieller Materialien für das erste Material 206, das zweite Material 208 und das optionale Diaphragma 205 als Lösungsprinzip.

Zur Bestimmung der Temperatur im Inneren der Zelle 200 ist im dargestellten Ausführungsbeispiel ein faseroptischer Sensor 120 vorhanden, welcher das erste Material 206, das Diaphragma 205 und das zweite Material 208 durchdringt. Diese Anordnung erlaubt unmittelbar die Bestimmung der Temperatur im Inneren der Zelle 200 und damit mit größerer Genauigkeit als die Ausführungsform gemäß der Figuren 1 und 2. Selbstverständlich kann der faseroptische Sensor 120 auch eine andere räumoche Anordnung innerhalb der Zelle 200 haben, als in Figur 3 dargestellt.

Figur 4 zeigt eine Ausführungsform einer Signalauslese für eine Mehrzahl von faseroptischen Sensoren 120. Beispielhaft sind in Figur 4 vier Lichtwellenleiter 120a, 120b, 120c und 120d dargestellt. Selbstverständlich kann die Anzahl der Lichtwellenleiter 120 in anderen Ausführungsformen der Erfindung auch größer oder kleiner sein. In einigen Ausführungsformen der Erfindung kann die Anzahl der Lichtwellenleiter 120 zwischen 1 und 200 oder zwischen 5 und 50 betragen.

Im dargestellten Ausführungsbeispiel ist jeder der Lichtwellenleiter 120 mit einer Mehrzahl von Faser-Bragg-Gittern 110 versehen. Im dargestellten Ausführungsbeispiel weist jeder Lichtwellenleiter 120 fünf Faser-Bragg-Gitter 110 auf. In anderen Ausführungsformen der Erfindung kann die Anzahl der Faser-Bragg-Gitter 110 größer oder auch kleiner sein. Meist wird sie zwischen 1 und etwa 50 liegen. Der Abstand zweier benachbarter Faser-Bragg-Gitter 110 kann an den Abstand der Temperaturmessstellen angepasst sein, beispielsweise an den Abstand benachbarter Zellen. Die Längsausdehnung eines einzelnen Faser-Bragg-Gitters kann zwischen 4 mm und etwa 10 mm liegen. Ein Faser-Bragg-Gitter 110 mit vorgebbarer Gitterkonstante kann beispielsweise mit einem Kurzpullaser in das Material einer optischen Faser eingeschrieben werden. Dies erlaubt die räumliche Positionierung und die Wahl der Gitterkonstante entsprechend der Geometrie des Energiespeichers 2.

In einigen Ausführungsformen der Erfindung weisen die verschieden Faser-Bragg-Gitter eines einzelnen Lichtwellenleiters 120 unterschiedliche Gitterkonstanten auf. Faser-Bragg-Gitter 110 von verschiedenen Lichtwellenleitern, beispielsweise von Lichtwellenleiter 120a und 120b, können dieselbe Gitterkonstante aufweisen. Einzelne Lichtwellenleiter 120a, 120b, 120c und 120d können eine unterschiedliche Anzahl von Faser-Bragg-Gittern 110 aufweisen und/oder die Faser-Bragg-Gitter 110 können einen unterschiedlichen Abstand zueinander aufweisen.

Die Lichtwellenleiter 120 können jeweils innerhalb des elektrochemischen Energiespeichers verlaufen, wie anhand von Figur 1 und Figur 2 bereits erläutert wurde oder innerhalb einer Zelle, wie anhand von Figur 3 dargestellt.

In einigen Ausführungsformen der Erfindung ist es möglich, einen einzelnen Lichtwellenleiter 120 mit einer Lichtquelle und einer Auswerteeinheit zu verbinden. Auf diese Weise kann eine besonders hohe Abfragefrequenz und damit eine zeitlich engmaschige Überwachung des Lichtwellenleiters erfolgen. In anderen Ausführungsformen der Erfindung können eine Mehrzahl von Lichtwellenleitern 120a, 120b, 120c und 120d mittels jeweils zugeordneten Verbindungswellenleitern 150 mit einem optionalen Multiplexer 40 verbunden werden. Die Verbindungswellenleiter 150 können einstückig mit dem Lichtwellenleiter 120 gefertigt sein, welcher als Sensorelement eingesetzt wird. Dadurch kann die Anzahl der Messstellen vergrößert werden.

Der optionale Multiplexer 40 verbindet die Lichtwellenleiter 120a, 120b, 120c und 120d zyklisch mit zumindest einer Lichtquelle 601 und/oder 602 und zumindest einer Auswerteeinheit 30 und/oder 50, so dass die Sensorelemente zyklisch ausgelesen und die erhaltenen Daten visualisiert und/oder gespeichert und/oder einer Regeleinheit zugeführt werden können.

Der Multiplexer 40 hat im dargestellten Ausführungsbeispiel einen Zufuhrwellenleiter, über welchen Licht aus einer Lichtquelle 60 zu dem jeweils aktiven Lichtwellenleiter 120 geleitet werden kann. Die Lichtquelle 60 kann beispielsweise Licht einer breiten spektralen Verteilung bereitstellen. Hierzu kann die Lichtquelle 60 eine Superlumineszenzdiode 601 enthalten.

In anderen Ausführungsformen der Erfindung kann die Lichtquelle 60 einen gepulsten Laserstrahl aussenden, beispielsweise mit einer Wellenlänge von etwa 1 µm bis etwa 0,5 µm und einer Pulsdauer von etwa 0,5 ns bis etwa 5 ns. Hierzu kann die Lichtquelle 60 einen Kurzpulslaser 602 enthalten, beispielsweise einen gütegeschalteten Mikrochiplaser.

In einigen Ausführungsformen der Erfindung enthält die Lichtquelle 60 sowohl eine erste Lichtquelle 601, welche eine spektral breitbandige Strahlung bereitstellt als auch eine zweite Lichtquelle 602, welche eine gepulste und spektral schmalbandige Strahlung aussendet. Die erste Lichtquelle 601 kann dabei eine gepulste Lichtquelle oder eine Dauerstrichquelle sein. In einigen Ausführungsformen weist das von der zweiten Lichtquelle 602 ausgesandte Licht eine andere Wellenlänge auf, als das von der ersten Lichtquelle 601 ausgesandte Licht.

Das Licht der Lichtquelle 60 durchläuft den über den Multiplexer 40 mit der Lichtquelle verbundenen Lichtwellenleiter 120. An den Faser-Bragg-Gittern 110 wird jeweils ein vorgegebener Spektralbereich des Lichtes der ersten Lichtquelle 601 reflektiert, wohingegen der verbleibende Anteil des Lichtes den Lichtwellenleiter 120 weiter durchläuft. Das Licht der zweiten Lichtquelle 602 wird durch Raman- und/oder Brillouinstreuung entlang des Lichtwellenleiters 120 gestreut und zumindest teilweise über den Zufuhrwellenleiter 150 und den Multiplexer 40 in die Einfallsrichtung zurückgeworfen.

Das aus dem Wellenleiter 120 reflektierte Licht gelangt in eine Nachweiseinrichtung 30, wenn nur die Lichtquelle 601 vorhanden ist. In diesem Fall kann die Nachweiseinrichtung 50 entfallen. Das aus dem Wellenleiter 120 gestreute Licht gelangt in eine Nachweiseinrichtung 50, wenn nur die Lichtquelle 602 vorhanden ist. In diesem Fall kann die Nachweiseinrichtung 30 entfallen. Wenn zwei Lichtquellen 601 und 602 vorhanden sind, gelangt das aus dem Wellenleiter 100 reflektierte bzw. gestreute Licht über den Knotenpunkt 180 in zwei Nachweiseinrichtungen 30 und 50. Fallweise kann am Knotenpunkt 180 ein Interferenzkoppler vorgesehen sein, um das eintreffende Licht auf zwei Lichtwellenleiter 310 und 510 aufzuteilen. In anderen Ausführungsformen kann am Knotenpunkt 180 ein einfaches Spektrometer vorgesehen sein, welches Licht eines ersten Wellenlängenbereichs in den Wellenleiter 310 und Licht eines zweiten Wellenlängenbereichs in den Wellenleiter 510 einkoppelt.

Das von der ersten Lichtquelle 601 ausgesandte und von den Faser-Bragg-Gittern 110 reflektierte Licht kann mittels eines planaroptischen Filterelementes nachgewiesen werden. In einigen Ausführungsformen der Erfindung kann das planaroptische Filterelement aus einem Material hergestellt sein, welches in etwa denselben Brechungsindex aufweist wie der Wellenleiter 120. Dadurch kann die Fehlanpassung der Signale vermindert und die Messgenauigkeit des Sensorelementes gesteigert werden.

In der Ausführungsform gemäß Figur 4 wird das planaroptische Filterelement durch zumindest einen Arrayed-Waveguide-Chip 30 gebildet. Der Arrayed-Waveguide-Chip weist einen Zufuhrwellenleiter 310 auf, durch welchen die reflektierten Anteile des Lichtes einem Koppler 320 zugeführt werden. Im Koppler 320 kommt es zur freien Ausbreitung der zugeführten Signale. Am gegenüberliegenden Ende des Kopplers 320 setzt eine Mehrzahl von Lichtwellenleitern 330 an, welche jeweils einen Teil des optischen Signals aufnehmen. Aufgrund der unterschiedlichen Länge der Lichtwellenleiter 330 kommt es am Eingang des Interferenzkopplers 340 zu Phasenverschiebungen zwischen den Eingangssignalen.

Im Interferenzkoppler 340 kommen die Signale schließlich zur Interferenz. Im Ergebnis wird ein Wellenlängenunterschied der im Zufuhrwellenleiter 310 laufenden Signale in einen Ortsunterschied am Ausgang des Kopplers 340 abgebildet.

Am Ausgang des Kopplers 340 steht ein Photodiodenarray 350 zur Verfügung, welches eine ortsaufgelöste Messung des optischen Signals erlaubt. Aufgrund des im Photodiodenarray 350 bestimmten Ortes kann die Wellenlänge des über den Zufuhrwellenleiter 310 empfangenen Signals und aus der Wellenlänge das jeweilige Faser-Bragg-Gitter 110 bestimmt werden, an welchem das Signal reflektiert wurde. Sofern das Faser-Bragg-Gitter 110 aufgrund einer mechanischen Spannung und/oder einer Temperaturänderung eine Längenänderung erfahren hat, kann die Längenänderung und damit die einwirkende Kraft bzw. die Temperatur aufgrund der gemessenen Wellenlänge bestimmt werden. Somit kann die Temperatur an jedem mit einem Faser-Bragg-Gitter versehenen Ort bestimmt werden.

Das Arrayed-Waveguide-Grating 30 kann in einigen Ausführungsformen als Chip hergestellt werden, bei welchem die optischen Elemente 320, 330 und 340 mittels konventioneller Lithographietechniken in einem Polymer hergestellt wurden und das Photodiodenarray 350 als integrierte Indiumphosphiddiodenzeile ausgeführt ist. Die optischen Bauteile und die Diodenzeile können dann auf einem Substrat oder zumindest in einem Schaltungsträger bzw. in einem Gehäuse integriert werden. Auf diese Weise ist ein kostengünstiger und zuverlässiger Aufbau der Signalauslese möglich.

Das von der zweiten Lichtquelle 602 ausgesandte und durch Raman- oder Brillouinstreuung zurückgeworfene Licht wird in die Messeinrichtung 50 ausgekoppelt. Die Messeinrichtung 50 enthält eine Einrichtung 501, welche sowohl die Intensität der Stokes-Linie als auch die Intensität der Antistokes-Linie bestimmt. Aus den gemessenen Amplituden kann das Verhältnis der Intensitäten bestimmt werden. Daraus lässt sich die Temperatur mit einer Genauigkeit von etwa 1 K bestimmen.

Weiterhin kann die Einrichtung 50 eine Einrichtung 502 zur Messung der Signallaufzeit enthalten. Hierzu erhält die Einrichtung 502 einen Trigger von der Lichtquelle 602, welcher den Zeitpunkt des Aussendens eines Lichtpulses markiert, und bestimmt die Zeitdifferenz bis zum Eintreffen der rückgestreuten Strahlung. Aus der Signallaufzeit kann in der Einrichtung 502 die Entfernung des Streupunktes von der Lichtquelle 602 bestimmt werden. In einigen Ausführungsbeispielen der Erfindung kann die Genauigkeit der Ortsbestimmung etwa 5 cm bis etwa 15 cm betragen. Sofern eine optionale Einrichtung 502 vorhanden ist, kann die Einrichtung 50 die Temperatur somit ortsaufgelöst im elektrochemischen Energiespeicher 1 bzw. in einer einzelnen Zelle 500 bestimmen. Sofern eine solche ortsabhängige Temperaturmessung nicht vorhanden oder nicht erforderlich ist, kann die Einrichtung 501 zur Messung der durchschnittlichen Temperatur des Lichtwellenleiters 120 verwendet werden.

Die Temperaturmessungen aus der Einrichtung 50 können zur Korrektur oder zur Plausibilisierung der im Arrayed-Waveguide-Grating 30 gemessenen Werte verwendet werden oder als alleinige Information über die Temperatur zumindest einer elektrochemischen Zelle bzw. eines Stranges in einem elektrochemischen Energiespeicher.

In einigen Ausführungsformen kann zusätzlich mit der Einrichtung 502 der zeitliche Verlauf der Intensität der von der zweiten Lichtquelle 602 ausgesandten Strahlung vermessen werden. Mit den gemessenen Werten für den zeitlichen Verlauf der Intensität kann die Ortsauflösung der Temperaturmessung weiter verbessert werden.

In einigen Ausführungsformen können der Multiplexer 40 und/oder die Messeinrichtung 50 und/oder das Arrayed-Waveguide-Grating 30 und/oder die Lichtquelle 60 mittels Faserkopplung verbunden werden. Auf diese Weise wird der Aufwand der Herstellung verringert und die Zuverlässigkeit der Anordnung erhöht.

Figur 5 zeigt die Messwerte eines erfindungsgemäßen faseroptischen Sensorelementes 120 in Kurve B im Vergleich zu einem bekannten Thermoelement in Kurve A. Die in Figur 5 gezeigten Messwerte wurden mittels eines Messaufbaus erhalten, bei welchem ein beheizbarer Prüfkörper sowohl mit dem faseroptischen Sensor als auch mit dem Thermoelement in Kontakt stand. Die Temperatur des Prüfkörpers steigt während einer Zeitspanne von 420 Sekunden von etwa 56° auf etwa 88° an.

Wie aus Figur A ersichtlich ist, zeigt das bekannte Thermoelement ein lineares Ansprechverhalten, d.h. der gleichmäßige Temperaturanstieg wird in einer Geraden abgebildet. Demgegenüber zeigt der erfindungsgemäße faseroptische Sensor nur geringe Abweichungen vom linearen Verhalten, welche durch eine korrespondierende Eingangssignalfilterung einer Regeleinrichtung leicht kompensierbar ist.

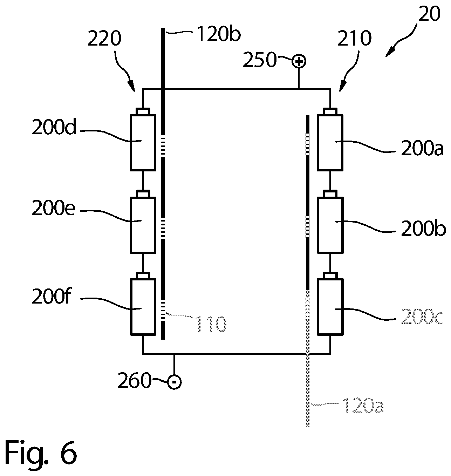

Figur 6 zeigt ein elektrisches Schaltbild eines erfindungsgemäßen Energiespeichers in einer weiteren Ausführungsform. In Figur 6 weist die Zellenanordnung 20 zwei parallel verschaltete Stränge 210 und 220 auf. In jedem der Stränge 210 und 220 befinden sich drei Zellen 200. Im ersten Strang 210 sind dies die elektrochemischen Zellen 200a, 200b und 200c. Im zweiten Strang 220 befinden sich die elektrochemischen Zellen 200d, 200e und 200f. Auf diese Weise kann an den Anschlussklemmen 250 und 260 der Zellenanordnung 20 der doppelte Nennstrom einer einzelnen Zelle 200 und die dreifache Nennspannung einer einzelnen Zelle 200 entnommen werden. Selbstverständlich ist die Erfindung nicht auf die dargestellte Anzahl von Zellen und Strängen beschränkt. Vielmehr kann die Anzahl der Zellen innerhalb eines Stranges und die Anzahl der Stränge an die Leistungserfordernisse des vom Energiespeicher versorgten Gerätes angepasst werden.

Parallel zu jedem Strang 210 und 220 verläuft ein faseroptischer Sensor 120a bzw. 120b. Jeder faseroptische Sensor weist im dargestellten Ausführungsbeispiel eine Mehrzahl von Faser-Bragg-Gittern 110 auf. Im dargestellten Ausführungsbeispiel ist jeder Zelle 200 ein Faser-Bragg-Gitter 110 zugeordnet. In anderen Ausführungsformen der Erfindung kann die Anzahl der Faser-Bragg-Gitter größer oder geringer sein, um entweder die Temperatur einer Gruppe von Zellen 200 zu überwachen oder die Temperatur an verschiedenen Stellen einer einzelnen Zelle 200 zu messen.

Die Temperaturinformationen, welche aus den faseroptischen Sensoren 120 ausgelesen werden können, können einer Regeleinrichtung zugeführt werden, um auf diese Weise die Stromentnahme eines jeden Stranges an die Leistungsfähigkeit der im Strang enthaltenen Zellen 200 anzupassen bzw. um den jedem Strang zugeführten Ladestrom an die Ladekapazität der Zellen 200 anzupassen. Zum Schalten der jeweiligen Ströme kann die Zellenanordnung 20 weitere, in Figur 6 nicht dargestellte Bauelemente enthalten, beispielsweise Bipolartransistoren, Feldeffekttransistoren, Triacs, Relais oder Schalter.

Die Temperaturinformationen, welche aus den faseroptischen Sensoren 120 ausgelesen werden können, können einer Regeleinrichtung zugeführt werden, um auf diese Weise die Heiz-und/oder Kühlleistung eines Wärmetauschers für jeden Strang bzw. für jede Zelle an die Wärmeentwicklung der im Strang enthaltenen Zellen 200 anzupassen. Zum Schalten der jeweiligen Kühlleistung kann die Zellenanordnung 20 weitere, in Figur 6 nicht dargestellte Bauelemente enthalten, beispielsweise Pumpen, Ventile, Speicher, Wärmetauscher oder Ventilatoren.

Selbstverständlich ist die Erfindung nicht auf die in den Figuren dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche und die vorstehende Beschreibung "erste" und "zweite" Merkmale definieren, so dient diese Bezeichnung der Unterscheidung zweier gleichartiger Merkmale, ohne eine Rangfolge festzulegen.

## Patentansprüche

1. Elektrochemischer Energiespeicher (2), enthaltend eine Zellenanordnung (20) mit einer Mehrzahl von elektrochemischen Zellen (200), von denen mehrere seriell verschaltet sind und jeweils einen ersten Anschlusskontakt (202) mit einer ersten Polarität und einen zweiten Anschlusskontakt (207) mit einer zweiten Polarität aufweisen, und Temperaturerfassungsmittel (100), welche mindestens eine Information über die Temperatur zumindest einer elektrochemischen Zelle (200) bereitstellen und zumindest einen faseroptischen Sensor (120) enthalten, der zumindest einen Teilabschnitt mit zumindest einem Faser-Bragg-Gitter (110) enthält, wobei eine temperaturabhängige mechanische Spannung auf den zumindest einen Teilabschnitt des faseroptischen Sensors (120) aufbringbar ist,
**dadurch gekennzeichnet, dass**
der Energiespeicher (2) eine Mehrzahl von Passstücken (130) enthält, jeweils zwei benachbarte Zellen (200) mit ihren ersten und zweiten Anschlusskontakten (202, 207) über die Passstücke (130) seriell verschaltet sind und die Passstücke (130) auch in Kontakt mit dem zumindest einen faseroptischen Sensor (120) stehen, so dass die Passstücke (130) die temperaturabhängige mechanische Spannung auf den zumindest einen Teilabschnitt des faseroptischen Sensors (120) aufbringen können.

2. Energiespeicher nach Anspruch 1, **dadurch gekennzeichnet, dass** die zumindest eine elektrochemische Zelle (200) ausgewählt ist aus einer Brennstoffzelle und/oder einer Primärzelle und/oder einer Sekundärzelle.

3. Energiespeicher nach Anspruch 2, **dadurch gekennzeichnet, dass** die Sekundärzelle ausgewählt ist aus einer Lithium-Zelle und/oder einer Lithium-Keramikzelle und/oder einer Nickel-Cadmiumzelle und/oder einer Nickel-Metallhydridzelle und/oder eine Natrium-Nickelchloridzelle und/oder einer Metall-Luft-Redox-Flow-Zelle.

4. Energiespeicher nach einem der Ansprüche 1 oder 2, weiterhin enthaltend eine erste Regeleinrichtung (70), welcher zumindest eine Information über die Temperatur zumindest einer elektrochemischen Zelle (200) zuführbar ist und welche dazu eingerichtet ist, einen Ladestrom und/oder einen Entladestrom zumindest einer elektrochemischen Zelle (200) zu regeln, insbesondere in Abhängigkeit der Temperatur.

5. Energiespeicher nach einem der Ansprüche 1 bis 4, weiterhin enthaltend einen Wärmetauscher (22).

6. Energiespeicher nach Anspruch 5, weiterhin enthaltend eine zweite Regeleinrichtung (75), welcher zumindest eine Information über die Temperatur zumindest einer elektrochemischen Zelle (200) zuführbar ist und welche dazu eingerichtet ist, einen Fluss eines Wärmeträgermediums in dem Wärmetauscher (22) zu regeln.

7. Energiespeicher nach einem der Ansprüche 1 bis 6, **dadurch gekennzeichnet, dass** der faseroptische Sensor (120) mit dem Eingang eines planaroptischen Filterelementes verbunden ist, insbesondere einem Arrayed-Waveguide-Grating (30) und/oder einem Spektrometer.

8. Energiespeicher nach einem der Ansprüche 1 bis 7, **dadurch gekennzeichnet, dass** jeder elektrochemischen Zelle (200) zumindest ein Teilabschnitt des faseroptischen Sensors (120) mit zumindest einem Faser-Bragg-Gitter (110) zugeordnet ist.

9. Energiespeicher nach einem der Ansprüche 1 bis 8, **dadurch gekennzeichnet, dass** die Passstücke (130) weiterhin zur Kontaktierung zweier benachbarter elektromagnetischer Zellen (200) dienen.

10. Energiespeicher nach einem der Ansprüche 1 bis 9, **dadurch gekennzeichnet, dass** die Zellanordnung (20) zumindest zwei parallel verschaltete Stränge (210, 220) enthält, innerhalb derer eine Mehrzahl von Zellen (200) seriell verschaltet ist, wobei der Lade und/oder Entladestrom eines jeden Stranges (210 220) in Abhängigkeit der Temperatur zumindest einer Zelle (200) regelbar ist.

11. Energiespeicher nach Anspruch 10, **dadurch gekennzeichnet, dass** jeder Strang (210 220) zumindest einen faseroptischen Sensor (120) enthält.

12. Verfahren zur Bestimmung der Temperatur zumindest einer Zelle (200) eines eine Zellenanordnung (20) enthaltenden elektrochemischen Energiespeichers (2), welches die folgenden Schritte enthält:
• Herstellen eines Kontaktes eines faseroptischen Sensors (120) mit einem Passstück (130), so dass das Passstück (130) eine temperaturabhängige mechanische Spannung auf einen Längsabschnitt des faseroptischen Sensors (120) ausüben kann, wobei der Längsabschnitt des faseroptischen Sensors (120) zumindest ein Faser-Bragg-Gitter (110) enthält und das Passstück (130) in Kontakt mit zumindest einer Zelle (200) des elektrochemischen Energiespeichers (2) steht;
• Einkoppeln eines optischen Auslesesignals in den faseroptischen Sensor (120);
• Erzeugen eines optischen Antwortsignals im faseroptischen Sensor (120) durch Reflektion an zumindest einem Faser-Bragg-Gitter (110) ;
• Auslesen des optischen Antwortsignals aus dem faseroptischen Sensor (120), und
• Regeln eines Ladestroms und/oder eines Entladestroms zumindest einer elektrochemischen Zelle (200) in Abhängigkeit des optischen Antwortsignals.

13. Verfahren nach Anspruch 12, **dadurch gekennzeichnet, dass** das Auslesen des optischen Antwortsignals die Bestimmung der Laufzeit und/oder die Bestimmung der Wellenlänge und/oder die Bestimmung der Intensität in einem vorgebbaren Wellenlängenbereich des Antwortsignals umfasst.

14. Verfahren nach einem der Ansprüche 12 oder 13, weiterhin enthaltend den folgenden Schritt:
• Regeln des Flusses eines Wärmeträgermediums in zumindest einem Wärmetauscher (22) in Abhängigkeit der Temperatur.

15. Fahrzeug mit einem Energiespeicher nach einem der Ansprüche 1 bis 11.

## Claims

1. Electrochemical energy storage (2), containing a cell arrangement (20) having a plurality of electrochemical cells (200), several of which are serially interconnected and have in each case a first connecting contact (202) with a first polarity and a second connecting contact (207) with a second polarity, and temperature detection means (100), which provide at least one piece of information on the temperature of at least one electrochemical cell (200) and contain at least one fiber optic sensor (120), which contains at least one segment with at least one fiber Bragg grating (110), wherein a temperature-dependent mechanical tension can be applied to the at least one segment of the fiber optic sensor (120), **characterized in that**
the energy storage (2) has a plurality of fitting pieces (130), in each case two adjacent cells (200) with their first and second connecting contacts (202, 207) are serially interconnected via the fitting pieces (130) and the fitting pieces (130) are also in contact with the at least one fiber optic sensor (120) in such a way that the fitting pieces (130) can apply the temperature-dependent mechanical tension to the at least one segment of the fiber optic sensor (120).

2. Energy storage according to claim 1, **characterized in that** the at least one electrochemical cell (200) is selected from a fuel cell and/or a primary cell and/or a secondary cell.

3. Energy storage according to claim 2, **characterized in that** the secondary cell is selected from a lithium cell and/or a lithium-ceramic cell and/or a nickel-cadmium cell and/or a nickel-metal hydride cell and/or a sodium-nickel chloride cell and/or a metal-air-redox-flow cell.

4. Energy storage according to any of claims 1 or 2, further containing a first control device (70), which can be provided with at least one piece of information on the temperature of at least one electrochemical cell (200) and which is configured to control a charging current and/or a discharge current of at least one electrochemical cell (200), in particular depending on the temperature.

5. Energy storage according to any of claims 1 to 4, further containing a heat exchanger (22).

6. Energy storage according to claim 5, further containing a second control device (75), which can be provided with at least one piece of information on the temperature of at least one electrochemical cell (200) and which is configured to control a flow of a heat transfer medium in the heat exchanger (22).

7. Energy storage according to any of claims 1 to 6, **characterized in that** the fiber-optic sensor (120) is connected to the inlet of a planar-optical filter element, in particular an arrayed waveguide grating (30) and/or a spectrometer.

8. Energy storage according to any of claims 1 to 7, **characterized in that** each electrochemical cell (200) is associated with at least one segment of the fiber-optic sensor (120) with at least one fiber Bragg grating (110).

9. Energy storage according to any of claims 1 to 8, **characterized in that** the fitting pieces (130) also serve to contact two adjacent electromagnetic cells (200).

10. Energy storage according to any of claims 1 to 9, **characterized in that** the cell arrangement (20) contains at least two parallel interconnected rows (210, 220), within which a plurality of cells (200) is serially interconnected, wherein the charging or discharge current of each row (210, 220) can be controlled depending on the temperature of at least one cell (200).

11. Energy storage according to claim 10, **characterized in that** each row (210, 220) contains at least one fiber-optic sensor (120).

12. Method for determining the temperature of at least one cell (200) of an electrochemical energy storage (2) containing a cell arrangement (20), said method containing the following steps:
• establishing a contact between a fiber-optic sensor (120) and a fitting piece (130) in such a way that the fitting piece (130) can apply a temperature-dependent mechanical tension to a longitudinal portion of the fiber-optic sensor (120), wherein the longitudinal portion of the fiber-optic sensor (120) contains at least one fiber Bragg grating (110) and the fitting piece (130) is in contact with at least one cell (200) of the electrochemical energy storage (2);
• coupling an optical read-out signal in the fiber-optic sensor (120);
• producing an optical response signal in the fiber-optic sensor (120) by reflection by at least one fiber Bragg grating (110);
• reading the optical response signal out of the fiber-optic sensor (120), and
• controlling a charging current and/or a discharge current of at least one electrochemical cell (200) depending on the optical response signal.

13. Method according to claim 12, **characterized in that** reading-out the optical response signal comprises determining the travel time and/or determining the wavelength and/or determining the intensity in a presettable wavelength range of the response signal.

14. Method according to any of claims 12 or 13, further containing the following step:
• controlling the flow of a heat transfer medium in at least one heat exchanger (22) depending on the temperature.

15. Vehicle having an energy storage according to any of claims 1 to 11.

## Revendications

1. Accumulateur d'énergie électrochimique (2), comportant
un ensemble de cellules (20) avec une pluralité de cellules électrochimiques (200) dont plusieurs sont connectées en série et comprennent chacune un premier contact de connexion (202) avec une première polarité et un second contact de connexion (207) avec une seconde polarité, et
des moyens de détection de température (100) qui fournissent au moins une information sur la température d'au moins une cellule électrochimique (200) et qui comprennent au moins un capteur à fibre optique (120) qui présente au moins une zone partielle avec au moins une grille de Bragg à fibres (110), dans lequel une tension mécanique dépendante de la température peut être appliquée sur ladite au moins une zone partielle du capteur à fibre optique (120),
**caractérisé en ce que**
l'accumulateur d'énergie (2) comprend une pluralité d'éléments adaptateurs (130), deux cellules voisines (200) respectives sont connectées en série par leurs premier et second contacts de connexion (202, 207) via les éléments adaptateurs (130), et les éléments adaptateurs (130) sont également en contact avec ledit au moins un capteur à fibre optique (120), de sorte que les éléments adaptateurs (130) peuvent appliquer la tension mécanique dépendante de la température à ladite au moins une zone partielle du capteur à fibre optique (120).

2. Accumulateur d'énergie selon la revendication 1,
**caractérisé en ce que**
ladite au moins une cellule électrochimique (200) est choisie parmi une cellule à combustible et/ou une cellule primaire et/ou une cellule secondaire.

3. Accumulateur d'énergie selon la revendication 2,
**caractérisé en ce que**
ladite cellule secondaire est choisie parmi une cellule à base de lithium et/ou une cellule céramique à base de lithium et/ou une cellule à base de nickel et de cadmium et/ou une cellule à base de nickel et d'hydrure métallique et/ou une cellule à base de sodium et de chlorure de nickel et/ou une batterie à flux redox métal-air.

4. Accumulateur d'énergie selon l'une des revendications 1 ou 2,
comprenant en outre un premier moyen de régulation (70) auquel peut être amenée au moins une information sur la température d'au moins une cellule électrochimique (200) et qui est conçu pour réguler un courant de charge et/ou un courant de décharge d'au moins une cellule électrochimique (200), en particulier en fonction de la température.

5. Accumulateur d'énergie selon l'une des revendications 1 à 4,
comportant en outre un échangeur de chaleur (22).

6. Accumulateur d'énergie selon la revendication 5,
comprenant en outre un second moyen de régulation (75) auquel peut être amenée au moins une information sur la température d'au moins une cellule électrochimique (200) et qui est conçu pour réguler un flux d'un fluide caloporteur dans l'échangeur de chaleur (22).

7. Accumulateur d'énergie selon l'une des revendications 1 à 6,
**caractérisé en ce que** le capteur à fibre optique (120) est relié à l'entrée d'un élément de filtrage optique planaire, en particulier à un réseau dit "Arrayed-Waveguide-Grating" (30) et/ou à un spectromètre.

8. Accumulateur d'énergie selon l'une des revendications 1 à 7,
**caractérisé en ce qu'**à chaque cellule électrochimique (200) est associée au moins une zone partielle du capteur à fibre optique (120) avec au moins une grille de Bragg à fibres (110).

9. Accumulateur d'énergie selon l'une des revendications 1 à 8,
**caractérisé en ce que** les éléments adaptateurs (130) servent en outre à la mise en contact de deux cellules électromagnétiques voisines (200).

10. Accumulateur d'énergie selon l'une des revendications 1 à 9,
**caractérisé en ce que** l'ensemble de cellules (20) comprend au moins deux rangées (210, 220) connectées en parallèle, à l'intérieur desquelles une pluralité de cellules (200) sont connectées en série, le courant de charge et/ou de décharge de chaque rangée (210, 220) peut être régulé en fonction de la température d'au moins une cellule (200).

11. Accumulateur d'énergie selon la revendication 10,
**caractérisé en ce que** chaque rangée (210, 220) comprend au moins un capteur à fibre optique (120).

12. Procédé de détermination de la température d'au moins une celle (200) d'un accumulateur d'énergie électrochimique (2) comprenant un ensemble de cellules (20), qui comprend les étapes suivantes consistant à :
• établir un contact d'un capteur à fibre optique (120) avec un élément adaptateur (130), de sorte que l'élément adaptateur (130) peut exercer une tension mécanique dépendante de la température sur une portion longitudinale du capteur à fibre optique (120), la portion longitudinale du capteur à fibre optique (120) comprenant au moins une grille de Bragg à fibres (110), et l'élément adaptateur (130) étant en contact avec au moins une cellule (200) de l'accumulateur d'énergie électrochimique (2),
• coupler un signal de lecture optique dans le capteur à fibre optique (120) ;
• générer un signal de réponse optique dans le capteur à fibre optique (120) par réflexion sur au moins une grille de Bragg à fibres (110) ;
• lire le signal de réponse optique dans le capteur à fibre optique (120), et
• réguler un courant de charge et/ou un courant de décharge d'au moins une cellule électrochimique (200) en fonction du signal de réponse optique.

13. Procédé selon la revendication 12, **caractérisé en ce que** la lecture du signal de réponse optique inclut la détermination du temps de parcours et/ou la détermination de la longueur d'onde et/ou la détermination de l'intensité dans une plage donnée de longueur d'onde du signal de réponse.

14. Procédé selon l'une des revendications 12 ou 13, comprenant en outre l'étape suivante consistant à :
• réguler le flux d'un fluide caloporteur dans au moins un échangeur de chaleur (22) en fonction de la température.

15. Véhicule comportant un accumulateur d'énergie selon l'une des revendications 1 à 11.
